# FASCICULE DE BREVET EUROPEEN

(11) **EP 3 090 903 B1**
(45) Date de publication et mention de la délivrance du brevet: **11.09.2019**
(21) Numéro de dépôt: 16167950.1
(22) Date de dépôt: 02.05.2016
(51) Int. Cl.: B60R 13/08, B32B 5/18, G10K 11/16

(54) **PAROI DE VÉHICULE AUTOMOBILE COMPORTANT DEUX PEAUX MUNIES D'EXCROISSANCES ET PRENANT EN SANDWICH UNE ÂME**
KRAFTFAHRZEUGWAND, DIE ZWEI HÄUTE MIT AUSWÜCHSEN UMFASST, DIE EINEN INNENKERN WIE EIN SANDWICHPANEEL EINSCHLIESSEN
MOTOR VEHICLE WALL HAVING TWO SKINS PROVIDED WITH PROTRUSIONS AND SANDWICHING A CORE

(30) Priorité: 05.05.2015 FR 1554023
(43) Date de publication de la demande: 09.11.2016
(73) Titulaire: COMPAGNIE PLASTIC OMNIUM, 69007 Lyon (FR)
(72) Inventeur: HERAULT, Richard, 69740 Genas (FR)
(74) Mandataire: LLR

(56) Documents cités:
- DE-U1- 9 408 118
- DE-U1- 29 605 599
- DE-U1-202005 009 096
- US-A- 5 483 028

## Description

La présente invention concerne le domaine des parois isolantes phoniques.

L'invention concerne plus particulièrement une paroi de véhicule automobile comportant une première peau et une deuxième peau prenant en sandwich une âme.

Dans un véhicule automobile, on souhaite isoler acoustiquement l'habitacle des bruits générés par le moteur du véhicule et des bruits extérieurs (frottement des pneus sur la route en particulier).

Cette isolation phonique est réalisée grâce à une paroi, par exemple cette paroi est le plancher du véhicule. Cependant, dans certains cas l'isolation phonique est insuffisante, et il est nécessaire d'améliorer cette isolation.

Une solution consiste à augmenter l'épaisseur de la paroi. On diminue ainsi la transmission des ondes acoustiques au travers de la paroi, sans diminuer la rigidité de la paroi. Cette solution présente l'inconvénient d'augmenter le poids du véhicule, et son coût, ce qui est indésirable.

La présente invention vise à remédier à ces inconvénients.

Le document DE 20 2005 009096U décrit une paroi de véhicule automobile comportant une première peau et une deuxième peau prenant en sandwich une âme, en ce que ladite âme est réalisée en un matériau dont la rigidité est inférieure à la rigidité de chacune desdites peaux, en ce que ladite première peau présente sur sa face interne des premières excroissances qui pénètrent dans ladite âme et qui sont disjointes de ladite deuxième peau, et en ce que ladite deuxième peau présente sur sa face interne des deuxièmes excroissances qui pénètrent dans ladite âme et qui sont disjointes de ladite première peau et desdites premières excroissances.

L'invention vise à proposer une paroi de véhicule automobile comportant une première peau et une deuxième peau prenant en sandwich une âme, qui offre une isolation acoustique améliorée, tout en minimisant le poids et le coût de fabrication de cette paroi, et sans diminuer de façon préjudiciable la rigidité de la paroi. En effet, dans certains cas la paroi est une pièce structurelle du véhicule automobile (par exemple le plancher d'un véhicule automobile), et cette paroi doit donc présenter une rigidité suffisante.

Ce but est atteint grâce au fait que l'âme est réalisée en un matériau dont la rigidité est inférieure à la rigidité de chacune des peaux, et en ce qu'au moins la première peau présente sur sa face interne des premières excroissances qui pénètrent dans l'âme et qui sont disjointes de la deuxième peau, les premières excroissances étant disposées de façon irrégulière sur la face interne et présentant des géométries variables d'une première excroissance à une autre première excroissance, de telle sorte que la transmission d'ondes acoustiques au travers de la paroi est minimisée.

Grâce à ces dispositions, la transmission des ondes acoustiques au travers de la paroi est perturbée par les excroissances des peaux, et par la différence de rigidité entre l'âme et les peaux. La disposition irrégulière et les géométries différentes entre les excroissances, perturbe la transmission des ondes acoustiques au travers de la paroi. De plus, la pénétration des excroissances dans l'âme augmente la rigidité en flexion de la paroi par rapport à une paroi identique mais dont les peaux ne présentent pas d'excroissances. L'absence de contact entre les excroissances de la première peau et la deuxième peau permet d'éviter une transmission des ondes acoustiques par ces excroissances directement de la première peau à la deuxième peau.

Avantageusement, le matériau de l'âme est viscoélastique.

Ainsi, la dissipation par l'âme de l'énergie des ondes acoustiques est augmentée, et par la même l'isolation acoustique de la paroi.

Selon l'invention, la deuxième peau présente sur sa face interne des deuxièmes excroissances qui pénètrent dans l'âme et qui sont disjointes de la première peau et des premières excroissances, les deuxièmes excroissances étant disposées de façon irrégulière sur la face interne de la deuxième peau et présentant des géométries variables d'une deuxième excroissance à une autre deuxième excroissance.

Ainsi, on obtient une paroi dont la rigidité est augmentée, sans que la transmission des ondes acoustiques au travers de la paroi soit favorisée. En effet, les deuxièmes excroissances ne sont pas en contact avec les premières excroissances, et ces deuxièmes excroissances favorisent la dissipation des ondes acoustiques.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'une paroi selon l'invention,
- la figure 2 est une vue en coupe transversale de la paroi de la figure 1 selon le plan II-II,
- la figure 3 est une vue en coupe transversale d'une paroi selon une variante de l'invention,
- la figure 4 est une vue en coupe transversale d'une paroi selon une autre variante de l'invention.

On considère une paroi de véhicule automobile qui comprend une première peau 10, une deuxième peau 20, et une âme 50 qui est prise en sandwich entre cette première peau 10 et cette deuxième peau 20. La première peau 10 et la deuxième peau 20 sont solidaires de l'âme 50 (par exemple par collage) de façon à former un seul bloc, ce qui est nécessaire pour assurer la rigidité en flexion de la paroi.

Dans la description ci-dessous, on prend l'exemple de peaux planes, de telle sorte que la paroi est une plaque plane. Cependant l'invention s'applique également au cas où les peaux ne sont pas planes (la paroi est alors une coque incurvée). On définit une surface médiane S de la paroi qui est située à égale distance de la première peau 10 et de la deuxième peau 20. Cette surface médiane est dans ce cas un plan médian.

Dans la description qui suit les termes "interne" et "externe" désignent respectivement des éléments qui sont placés ou orientés vers la surface médiane S de la paroi ou en direction opposée de cette surface médiane S.

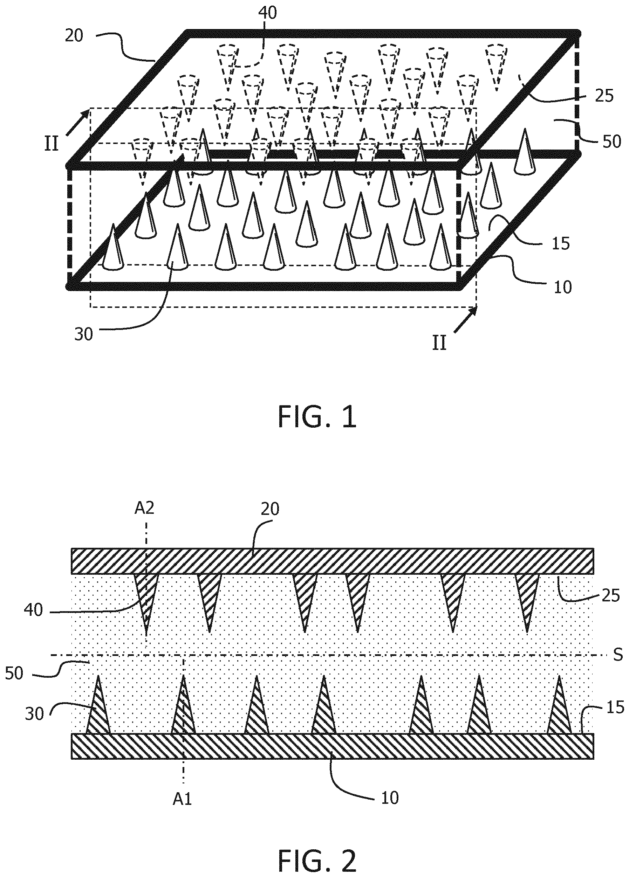

La figure 1 montre, en perspective, une paroi selon l'invention.

La première peau 10 présente sur sa face interne 15 des premières excroissances 30 qui pénètrent dans l'âme 50 et qui sont disjointes de la deuxième peau 20.

Les premières excroissances 30 sont liées avec l'âme 50, de façon à permettre une transmission des efforts entre ces excroissances 30 est l'âme 50. Cette liaison peut être de nature mécanique, de par la rugosité des surfaces de l'âme 50 et des premières excroissances 30 qui sont en contact, et éventuellement par la pression exercée par l'âme 50 sur les premières excroissances 30 et qui résulte de la déformation de l'âme 50 due à la pénétration des excroissances 30 dans l'âme 50. Cette liaison peut, alternativement ou en supplément, être de nature chimique, par exemple en utilisant une colle à l'interface entre l'âme 50 et des premières excroissances 30.

Les premières excroissances 30 sont disposées de façon irrégulière sur la face interne, comme représenté sur la figure 1, c'est-à-dire que les premières excroissances ne sont pas toutes disposées aux intersections d'un quadrillage régulier de la face interne 10 (on entend par quadrillage régulier un quadrillage réalisé par des ensembles de lignes parallèles formant des triangles ou des rectangles tous identiques).

Avantageusement, le matériau de l'âme 50 est poreux.

Ainsi, ce matériau présente des alvéoles, qui peuvent être fermées ou ouvertes. Si aucune des alvéoles ne débouche sur la surface de l'âme 50, toutes les alvéoles sont fermées. Les alvéoles sont remplies d'air. Alternativement, les alvéoles fermées sont remplies de gaz.

La dissipation des ondes acoustiques au sein de l'âme 50 est ainsi augmentée, car les alvéoles contribuent à atténuer les ondes acoustiques qui se propagent dans l'âme 50.

Avantageusement, la deuxième peau 20 présente sur sa face interne 25 des deuxièmes excroissances 40 qui pénètrent dans l'âme 50 et qui sont disjointes de la première peau 10 et des premières excroissances 30, les deuxièmes excroissances 40 étant disposées de façon irrégulière sur la face interne 25 de la deuxième peau 20 et/ou présentant des géométries variables d'une deuxième excroissance 40 à une autre deuxième excroissance 40.

La figure 2 est une vue en coupe d'une portion de la paroi de la figure 1 selon le plan II-II. Ce plan est perpendiculaire au plan de la première peau 10 et au plan de la deuxième peau 20 (ou au plan moyen de la paroi sur cette portion si la paroi est incurvée).

Les premières excroissances 30 sont espacées de façon irrégulière (la distance entre deux premières excroissances 30 adjacentes varie d'une paire de premières excroissances 30 adjacentes à une autre).

De façon similaire, les deuxièmes excroissances 40 sont espacées de façon irrégulière (la distance entre deux deuxièmes excroissances 40 adjacentes varie d'une paire de deuxièmes excroissances 40 adjacentes à une autre).

Avantageusement, les premières excroissances 30 s'étendent selon des premiers axes A1 et les deuxièmes excroissances 40 s'étendent selon des deuxièmes axes A2, chacun des deuxièmes axes A2 étant distinct de chacun des premiers axes A1.

Les premières excroissances 30 et les deuxièmes excroissances 40 sont ainsi décalées deux à deux dans un plan longitudinal parallèle au plan médian S. Ainsi, pour une même sollicitation extérieure, les contraintes en cisaillements générées dans l'âme 50 sont supérieures par rapport au cas où chaque première excroissance 30 est alignée avec une deuxième excroissance 40 (c'est-à-dire au cas où chaque premier axe A1 est confondu avec un deuxième axe A2). Cette situation est représentée sur la figure 1.

La rigidité de la paroi est alors supérieure. La dissipation des ondes acoustiques est favorisée par le fait qu'il n'existe aucune liaison rigide entre la première peau 10 et la deuxième peau 20.

Par exemple, les premiers axes A1 et les deuxièmes axes A2 sont tous parallèles à la direction transversale de la paroi (ou à la direction transversale locale de la paroi sur la portion de la paroi considérée). Chacune des excroissances (30, 40) est ainsi perpendiculaire à la première peau 10 et à la deuxième peau 20.

Avantageusement, chacune des premières excroissances 30 et chacune des deuxièmes excroissances 40 traverse la surface médiane S de la paroi.

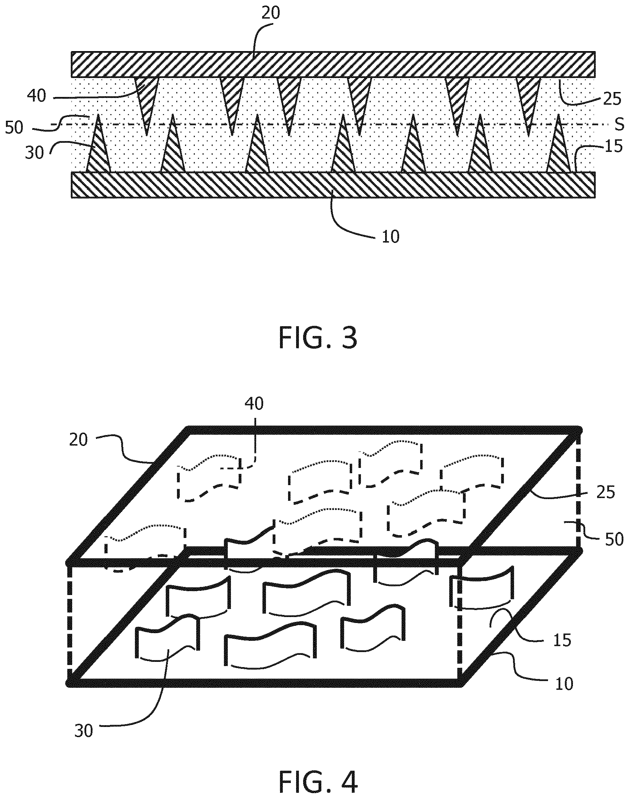

Cette situation est représentée sur la figure 3, qui est une vue en coupe transversale (perpendiculairement à la paroi) d'une portion de la paroi selon cette variante.

Ainsi, la rigidité en cisaillement de l'âme 50 lorsque la paroi se déforme est augmentée.

Avantageusement, chacune des excroissances (30, 40) a une forme de pointe dont la base se situe au niveau de la peau (10, 20) à partir de laquelle cette excroissance (30, 40) s'étend.

Ainsi dans le cas où, pour chacune des peaux, les excroissances portées par cette peau sont d'un seul tenant avec cette peau (c'est-à-dire forment un seul bloc avec cette peau) et où la peau est fabriquée par un procédé qui implique un démoulage (par exemple l'injection), la fabrication de la paroi selon l'invention est simplifiée.

Par exemple, chaque excroissance (30, 40) est un cône.

Par exemple, chaque excroissance (30, 40) a une section transversale (perpendiculairement à son axe A1 ou A2) en forme de croix.

Selon l'invention, les excroissances (30, 40) peuvent présenter d'autres géométries que des pointes, par exemple des nervures en forme de bandes incurvées ou de plaques, ou par exemple des tiges.

Sur les figures 1 à 3, les premières excroissances 30 et les deuxièmes excroissances 40 sont toutes de géométrie identique (c'est-à-dire qu'elles présentent la même taille et la même forme), et sont disposées de façon irrégulière sur la face interne 15 de la première feuille 10, et sur la face interne 25 de la deuxième feuille 20 respectivement.

Alternativement, les premières excroissances 30 et les deuxièmes excroissances 40 ne sont toutes de géométrie identique (elles sont de tailles et/ou de formes différentes), et sont disposées de façon régulière sur la face interne 15 de la première feuille 10, et sur la face interne 25 de la deuxième feuille 20 respectivement.

Alternativement, les premières excroissances 30 et les deuxièmes excroissances 40 ne sont toutes de géométrie identique (elles sont de tailles et/ou de formes différentes), et sont disposées de façon irrégulière sur la face interne 15 de la première feuille 10, et sur la face interne 25 de la deuxième feuille 20 respectivement.

Les essais réalisés par les inventeurs ont montré que la disposition irrégulière et les géométries différentes entre les excroissances, perturbent la transmission des ondes acoustiques au travers de la paroi davantage que dans le cas où les excroissances sont disposées de façon régulière sur leur feuille respectives et présentent toutes la même géométrie.

La dernière variante ci-dessus est représentée sur la figure 4, dans le cas où les premières excroissances 30 et les deuxièmes excroissances 40 sont des bandes incurvées (de géométrie différente les unes des autres, et disposées de façon irrégulière).

Avantageusement, au moins une des peaux (10, 20) présente sur sa face externe des excroissances externes 60.

Selon l'invention, la paroi peut être une partie structurelle du véhicule, par exemple le plancher. En effet, la solution selon l'invention permet d'obtenir une rigidité adéquate de la paroi tout en améliorant l'insonorisation de la paroi.

## Revendications

1. Paroi de véhicule automobile comportant une première peau (10) et une deuxième peau (20) prenant en sandwich une âme (50), ladite âme (50) étant réalisée en un matériau dont la rigidité est inférieure à la rigidité de chacune desdites peaux, ladite première peau (10) présentant sur sa face interne (15) des premières excroissances (30) qui pénètrent dans ladite âme (50) et qui sont disjointes de ladite deuxième peau (20), lesdites premières excroissances (30) étant disposées de façon irrégulière sur ladite face interne (15) et présentant des géométries variables d'une première excroissance (30) à une autre première excroissance (30), et ladite deuxième peau (20) présentant sur sa face interne (25) des deuxièmes excroissances (40) qui pénètrent dans ladite âme (50) et qui sont disjointes de ladite première peau (10) et desdites premières excroissances (30), lesdites deuxièmes excroissances (40) étant disposées de façon irrégulière sur ladite face interne (25) et présentant des géométries variables d'une deuxième excroissance (40) à une autre deuxième excroissance (40), de telle sorte que la transmission d'ondes acoustiques au travers de ladite paroi est minimisée.

2. Paroi selon la revendication 1 **caractérisée en ce que** le matériau de ladite âme (50) est viscoélastique.

3. Paroi selon la revendication 1 ou 2 **caractérisée en ce que** le matériau de ladite âme (50) est poreux.

4. Paroi selon l'une quelconque des revendications 1 à 3 **caractérisée en ce que** lesdites premières excroissances (30) s'étendent selon des premiers axes (A1) et les deuxièmes excroissances (40) s'étendent selon des deuxièmes axes (A2), chacun desdits deuxièmes axes (A2) étant distinct de chacun desdits premiers axes (A1).

5. Paroi selon l'une quelconque des revendications 1 à 4 **caractérisée en ce que** chacune desdites premières excroissances (30) et chacune desdites deuxièmes excroissances (40) traverse la surface médiane S de ladite paroi.

6. Paroi selon l'une quelconque des revendications 1 à 5 **caractérisée en ce que** chacune desdites excroissances (30, 40) a une forme de pointe dont la base se situe au niveau de ladite peau (10, 20) à partir de laquelle ladite excroissance (30, 40) s'étend.

7. Paroi selon l'une quelconque des revendications 1 à 6 **caractérisée en ce que** au moins une desdites peaux (10, 20) présente sur sa face externe des excroissances externes (60).

## Patentansprüche

1. Kraftfahrzeugwand mit einer ersten Haut (10) und einer zweiten Haut (20), die einen Kern (50) sandwichartig in Eingriff nehmen, wobei der Kern (50) aus einem Material ist, dessen Steifigkeit kleiner ist als die Steifigkeit jeder der Häute, wobei die erste Haut (10) auf ihrer Innenseite (15) erste Auswüchse (30) aufweist, die den Kern (50) durchdringen und die von der zweiten Haut (20) getrennt sind, wobei die ersten Auswüchse (30) auf der Innenseite (15) unregelmäßig angeordnet sind und Geometrien aufweisen, die von einem ersten Auswuchs (30) zu einem anderen ersten Auswuchs (30) variabel sind, und wobei die zweite Haut (20) auf ihrer Innenseite (25) zweite Auswüchse (40) aufweist, die den Kern (50) durchdringen und die von der ersten Haut (10) und von den ersten Auswüchsen (30) getrennt sind, wobei die zweiten Auswüchse (40) auf der Innenseite (25) unregelmäßig angeordnet sind und Geometrien aufweisen, die von einem zweiten Auswuchs (40) zu einem anderen zweiten Auswuchs (40) variabel sind, in der Form, dass die Übertragung akustischer Wellen durch die Wand hindurch minimiert wird.

2. Wand nach Anspruch 1, **dadurch gekennzeichnet, dass** das Material des Kerns (50) viskoelastisch ist.

3. Wand nach Anspruch 1 oder 2, **dadurch gekennzeichnet, dass** das Material des Kerns (50) porös ist.

4. Wand nach einem der Ansprüche 1 bis 3, **dadurch gekennzeichnet, dass** die ersten Auswüchse (30) sich gemäß erster Achsen (A1) erstrecken und die zweiten Auswüchse (40) sich gemäß zweiter Achsen (A2) erstrecken, wobei jede der zweiten Achsen (A2) von jeder der ersten Achsen (A1) verschieden ist.

5. Wand nach einem der Ansprüche 1 bis 4, **dadurch gekennzeichnet, dass** jeder der ersten Auswüchse (30) und jeder der zweiten Auswüchse (40) die Mittelfläche S der Wand durchquert.

6. Wand nach einem der Ansprüche 1 bis 5, **dadurch gekennzeichnet, dass** jeder der Auswüchse (30, 40) die Form einer Spitze hat, deren Basis im Bereich der Haut (10, 20) liegt, von der aus sich der Auswuchs (30, 40) erstreckt.

7. Wand nach einem der Ansprüche 1 bis 6, **dadurch gekennzeichnet, dass** mindestens eine der Häute (10, 20) auf ihrer Außenfläche äußere Auswüchse (60) aufweist.

## Claims

1. Motor vehicle wall having a first skin (10) and a second skin (20) sandwiching a core (50), said core (50) being made of a material whose rigidity is less than the rigidity of each of said skins, said first skin (10) having on its inner side (15) first protuberances (30) which penetrate into said core (50) and which are separate from said second skin (20), said first protuberances (30) being arranged irregularly on said inner side (15) and having geometries varying from a first protuberance (30) to another first protuberance (30), and said second skin (20) having on its inner side (25) second protuberances (40) which penetrate into said core (50) and which are separate from said first skin (10) and said first protuberances (30), said second protuberances (40) being arranged irregularly on said inner side (25) and having geometries varying from a second protuberance (40) to another second protuberance (40), such that the transmission of acoustic waves through said wall is minimised.

2. Wall according to claim 1, **characterised in that** the material of said core (50) is viscolelastic.

3. Wall according to claim 1 or 2, **characterised in that** the material of said core (50) is porous.

4. Wall according to any one of claims 1 to 3, **characterised in that** said first protuberances (30) extend along first axes (A1) and the second protuberances (40) extend along second axes (A2), each of said second axes (A2) being separate from each of said first axes (A1).

5. Wall according to any one of claims 1 to 4, **characterised in that** each of said first protuberances (30) and each of said second protuberances (40) crosses the median surface S of said wall.

6. Wall according to any one of claims 1 to 5, **characterised in that** each of said protuberances (30, 40) has a pointed shape whose base is located at said skin (10, 20) from which said protuberance (30, 40) extends.

7. Wall according to any one of claims 1 to 6, **characterised in that** at least one of said skins (10, 20) has on its outer side external protuberances (60).
